# EUROPÄISCHE PATENTSCHRIFT

(11) **EP 1 053 629 B1**
(45) Veröffentlichungstag und Bekanntmachung des Hinweises auf die Patenterteilung: **02.05.2002**
(21) Anmeldenummer: 99906050.2
(22) Anmeldetag: 14.01.1999
(51) Int. Cl.: H04M 11/06, H04M 3/00

(54) **VERFAHREN ZUR BEHANDLUNG VON DURCH EIN ANALOGES FERNSPRECHENDGERÄT GELIEFERTEN FERNSPRECHSIGNALEN UND VON DURCH EINE DATENENDEINRICHTUNG GELIEFERTEN DATEN**
METHOD FOR PROCESSING TELEPHONE SIGNALS DELIVERED BY AN ANALOG TELEPHONE TERMINAL AND DATA DELIVERED BY A DATA TERMINAL
PROCEDE POUR LE TRAITEMENT DE SIGNAUX TELEPHONIQUES DELIVRES PAR UN TERMINAL TELEPHONIQUE ANALOGIQUE ET DE DONNEES DELIVREES PAR UN POSTE TERMINAL DE TRAITEMENT DE DONNEES

(30) Priorität: 05.02.1998 DE 19804591
(43) Veröffentlichungstag der Anmeldung: 22.11.2000
(73) Patentinhaber: SIEMENS AKTIENGESELLSCHAFT, 80333 München (DE)
(72) Erfinder: KUNISCH, Paul, D-82178 Puchheim (DE); RUDOLF, Hans-Werner, D-81667 München (DE)
(86) Internationale Anmeldenummer: DE9900059
(87) Internationale Veröffentlichungsnummer: WO9940685

(56) Entgegenhaltungen:
- EP-A- 0 503 528
- WO-A-97/50230

## Beschreibung

Die Erfindung betrifft ein Verfahren gemäß dem Oberbegriff des Patentanspruches 1 sowie eine Teilnehmeranschlußschaltung gemäß dem Oberbegriff des Anspruchs 3.

Es ist demnach eine Situation betroffen, bei der eine analoge Teilnehmerleitung eines Fernsprechvermittlungssystems gemeinsam von einem analogen Fernsprechendgerät und einer Datenendeinrichtung genutzt wird, wobei der Anschluß der Datenendeinrichtung an die Teilnehmerleitung über ein Modem erfolgt. Das Modem (Modulator/Demodulator) ist eine Datenübertragungseinrichtung, die dazu dient, die von der Datenendeinrichtung gelieferten digitalen Signale in übertragungstechnisch vorteilhafte Leitungssignale zu wandeln, die den elektrischen Bedingungen analoger Fernsprechverbindungen entsprechen bzw. eine Rückwandlung solcher Signale in Digitalsignale vorzunehmen. In diesem Zusammenhang werden die Daten Trägersignalen aufmoduliert, wobei unterschiedliche Modulationsverfahren zur Anwendung kommen.

Als solcher Art angeschlossene Datenendeinrichtung kommt beispielsweise ein Personal Computer (PC) in Frage.

Bei den bisher bekannten Datenübertragungen derart angeschlossener Datenendeinrichtungen über das Fernsprechnetz, sogenannte Modemübertragungen, erfahren die Daten in den Teilnehmeranschlußeinheiten der Fernsprechvermittlungsanlage dieselbe Behandlung wie die Sprachsignale, nämlich eine Bandbegrenzung auf weniger als 4 kHz, eine Analog/Digitalwandlung und eine Codierung gemäß einer nichtlinearen Kennlinie (A-law bzw. µ-law), um die Bitübertragungsrate entsprechend der begrenzten zur Verfügung stehenden Übertragungsbandbreite zu reduzieren.

Für die Datenübertragung wirken solche Behandlungen restriktiv, insbesondere wenn große Datenmengen übertragen werden sollen, wie dies bei Modemverbindungen der Fall ist, die über den Modempool eines Netzwerkproviders zum Internet führen.

Die Aufgabe der Erfindung besteht daher darin, für die genannten Voraussetzungen ein Verfahren zur Behandlung von Fernsprechsignalen und von Datenendeinrichtungen gelieferten Daten in der Teilnehmeranschlußschaltung anzugeben, das insbesondere für die Datenübertragung zu günstigeren Verhältnissen führt. Diese Aufgabe wird durch ein Verfahren und eine Teilnehmeranschlußschaltung gelöst, mit den Merkmalen der Kennzeichen der Patentansprüche 1 bzw. 3.

Es werden demnach zumindest die von der Datenendeinrichtung gelieferten Daten bei der erforderlichen Analog/Digital-Wandlung in der Teilnehmeranschlußschaltung einer Abtastung mit einer Abtastrate unterworfen, die über der für die Fernsprechinformationen erforderlichen Abtastrate liegt und/oder es erfahren die die von der Datenendeinrichtung gelieferten Daten repräsentierenden Abtastwerte eine Codierung gemäß einer linearen Kennlinie. Die solcher Art behandelten von der Datenendeinrichtung stammenden Daten werden direkt einem Datenübertragungsnetz zugeführt.

Es wird also einerseits darauf verzichtet, die von der Datenendeinrichtung stammenden Daten denselben Restriktionen wie die vom analogen Fernsprechendgerät stammenden Signale zu unterwerfen, wozu in erster Linie die Bitratenreduktion durch Anwendung einer nichtlinearen Kennlinie gehört, andererseits wird ohne Rücksicht auf das begrenzte Übertragungsband der Fernsprechübertragungswege mit den Bedürfnissen der Datenübertragung entsprechender Abtastrate gearbeitet, da wegen der direkten Weitergabe der Daten über ein Datenübertragungsnetz auf Bandbreitengrenzen keine Rücksicht genommen zu werden braucht. Die beiden Maßnahmen in Form der Vermeidung der nichtlinearen Codierung und des Arbeitens mit höherer Abtastrate als sie für die Fernsprechinformationen vorgesehen ist, können jeweils für sich oder aber in Kombination zur Anwendung kommen.

Weitere Ausgestaltungen der Erfindung sind in Unteransprüchen gekennzeichnet.

Gemäß einer ersten Ausgestaltung des erfindungsgemäßen Verfahrens werden die von den Datenendeinrichtungen gelieferten Datensignale für die Übertragung auf der Teilnehmerleitung einem Trägersignal aufmoduliert, dessen Frequenz über dem für die Übertragung der Fernsprechsignale zugelassenen Frequenzband liegt. Es fallen hiermit die Beschränkungen weg, die sich bisher auf der im Hinblick auf die Sprachbandbegrenzung eingehaltenen Obergrenze für die Frequenz des Trägersignals ergeben haben.

Eine weitere Ausgestaltung der Erfindung zeigt sich in Form einer Teilnehmeranschlußschaltung, die im Hinblick auf die Durchführung des erfindungsgemäßen Verfahrens konzipiert ist und in diesem Zusammenhang aus einem sowohl für die Sprachsignale als auch für die Datensignale genutzten Analog/Digital-Wandler und Digital/Analog-Wandler sowie einem auf dessen Digitalseite angeschlossenen Signalprozessor besteht, der die digitale Schnittstelle zu einerseits dem Koppelnetz der Fernsprechvermittlungsstelle andererseits zum Datennetz darstellt.

Nachstehend wird die Erfindung anhand eines Ausführungsbeispiels unter Bezugnahme auf eine Figur näher erläutert.

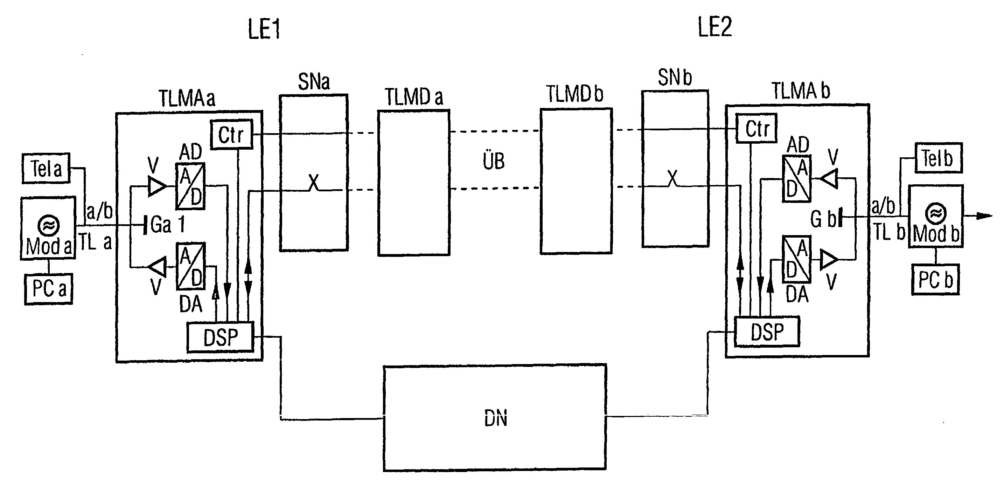

Die Figur zeigt im zur Erläuterung der Erfindung erforderlichen Umfang die Bestandteile zweier Fernsprechvermittlungsstellen LE1 und LE2, zwischen denen eine Übertragungsstrecke ÜB besteht, sowie als Block ein Datenübertragungsnetz DN.

Es wird die Modemkommunikation einer Datenendeinrichtung, die an die Fernsprechvermittlungsstelle LE1 angeschlossen ist, mit einer Datenendeinrichtung erläutert, die an die Fernsprechvermittlungsstelle LE2 angeschlossen ist. Bei diesen Datenendeinrichtungen kann es sich beispielsweise um die Personal Computer PCa und PCb handeln. Diese sind jeweils über ein Modem Moda bzw. Modb an eine analoge Teilnehmerleitung TLa bzw. TLb angeschlossen, durch die eine Verbindung mit der Teilnehmeranschlußschaltung TLMAa der Vermittlungsstelle LE1 bzw. TLMAb der Vermittlungsstelle LE2 hergestellt ist. Diese Teilnehmeranschlußleitungen TLa, TLb dienen auch und in erster Linie der Verbindung eines Fernsprechendgerätes Tela bzw. Telb mit den genannten Teilnehmeranschlußschaltungen.

Hier interessierende Teile der Teilnehmeranschlußschaltungen sind eine Gabelschaltung Ga bzw. Gb für den Zweidraht-/Vierdrahtübergang von der Teilnehmerleitung zu den vierdrähtigen Übertragungszweigen der Vermittlungsstelle, in diesen Vierdrahtzweigen liegende Verstärker V sowie im Sendezweig ein Analog/Digital-Wandler AD und im Empfangszweig ein Digital/Analog-Wandler DA. Weiterer Bestandteil sind ein digitaler Signalprozessor DSP, dem die Ausgangssignale des Analog/Digital-Wandlers AD zugeführt werden, und der dem Digital/Analog-Wandler DA Digitalsignale zuführt. Vermittlungsstellenseitig steht der digitale Signalprozessor DSP einerseits mit dem Koppelnetz SNa bzw. SNb der betreffenden Fernsprechvermittlungsstelle in Verbindung, andererseits bildet er eine Schnittstelle zu einem Datennetz DN, beispielsweise ein ATM-Netz oder dem Ether-Netz.

Als Bestandteil der Teilnehmeranschlußschaltungen ist außerdem noch ein Controller CTR dargestellt, der den digitalen Signalprozessor DSP steuert und Signalisierungsinformationen für die Herstellung von Fernsprechverbirdungen liefert, in welchem Zusammenhang er mit dem entsprechenden Controller der Vermittlungsstelle des gerufenen Teilnehmers über eine zwischen den beiden Vermittlungsstellen bestehende Signalisierungsverbindung kommuniziert.

Die Teilnehmerstrecke ÜB zwischen den beiden Vermittlungsstellen LE1 und LE2 ist über Anschlußschaltungen TLMDa bzw. TLMDb an die Koppelnetze dieser Vermittlungsstellen angeschlossen.

Bei einer Verbindung der Datenendeinrichtung PCa mit der Datenendeinrichtung PCb werden die von diesen Datenendeinrichtungen gelieferten digitalen Daten im Modem Moda bzw. Modb in Analogsignale umgewandelt und für die Übertragung auf der Teilnehmerleitung TLa einer Trägerschwingung aufmoduliert. Bei bisherigen Modemverbindungen, bei denen die Behandlung der Datensignale in den Einrichtungen der Fernsprechvermittlungsstelle und auf dem Übertragungsweg dieselbe Behandlung erfuhren wie Sprachinformationen des Fernsprechverkehrs hatte diese Trägerfrequenz im Hinblick auf die begrenzte Übertragungsbandbreite für Sprachinformationen von 3 kHz eine Frequenz von z.B. 2,6 kHz. In der Teilnehmeranschlußschaltung TDLMa werden diese in Form von Analogsignalen übertragenen Daten durch den Analog/Digital-Wandler ADA einer Analog-/Digital-Wandlung unterworfen. Die Abtastrate bisheriger Analog/Digital-Wandler betrug 8ksamples/s, womit nach einer Kompression entsprechend einer nichtlinearen Kennlinie in eine 8 Bit pro Codewort verwendende Codedarstellung die Standardübertragungsbitrate von 64 kBit/s für Fernsprechverbindungen eingehalten war.

Erfindungsgemäß erfolgt nun aber bei der Analog/Digital-Wandlung eine Abtastung der von der Datenendeinrichtung gelieferten Daten entsprechenden Analogsignalen mit einer wesentlich über die Abtastrate für Sprachinformationen liegenden Abtastrate, nämlich beispielsweise mit 64 ksamples/s. Die Codierung der Digitalsignale erfolgt dabei gemäß einer linearen Kennlinie mit beispielsweise mit 16 Bit. Diese Digitalsignale werden über den digitalen Signalprozessor dem Datennetz DN zugeführt, in dem unter den genannten Voraussetzungen eine Datenübertragung mit einer Übertragungsrate von ca. 1 Mbit/s stattfinden kann.

Die hier genannten Maßnahmen für die Behandlung der von den Datenendeinrichtungen stammenden Daten, nämlich die Abtastung mit höherer Abtastrate und die Vermeidung der für die Sprachsignalinformationen vorgesehenen Kompression könnten auch alternativ zur Anwendung kommen, wenn niedrigere Datenübertragungsraten ausreichend sind.

Da in der Praxis die Analog/Digital-Wandlung der Sprachinformationen mit demselben Analog/Digital-Wandler ADA erfolgt, werden die dementsprechenden Digitalsignale im digitalen Signalprozessor so bearbeitet, daß sie den unveränderten und international standardisierten Übertragungsverhältnissen für die Fernsprechsignalübertragung entsprechen, d.h. auf 8000 Abtastproben pro Sekunde reduziert und entsprechend einer nicht linearen Kennlinie auf eine Codedarstellung von 8 Bit umfassenden Codeworten komprimiert. Auf der Gegenseite, d.h. in der Teilnehmerschaltung TLMAb und dem Modem Modb spielen sich entsprechende Vorgänge ab.

Für die Analog/Digital-Wandlung kommen an sich beliebige Wandlerprinzipien in Frage, sofern sie nur die hohen Abtastraten in Form eines Vielfachen von 8000 Abtastproben pro Sekunde und die Darstellung der Digitalsignale als Codeworten mit mehr als 8 Bit gestatten. Besonders geeignet in diesem Zusammenhang ist allerdings ein sogenannter Sigma/Delta-Wandler, der mit einer sehr hohen Abtastrate (10 MHz) arbeitet, jedoch nur ein oder zwei Bit zur Digitalsignaldarstellung verwendet. Mit Hilfe des digitalen Signalprozessors wird in diesem Fall anschließend eine Dezimation auf eine niedrigere Abtastprobenzahl und eine Änderung der Codedarstellung auf Codeworte von beispielsweise 16 Bit erreicht.

Sofern auf der Gegenseite einer Modemverbindung noch mit konventioneller Hardware gearbeitet wird, kann selbstverständlich auch bei Einsatz der beschriebenen Teilnehmerschaltung nach wie vor die Datenübertragung über das Fernsprechnetz erfolgen, wozu der digitale Signalprozessor DSP die vom Analog/Digital-Wandler gelieferten Digitalsignale entsprechend der niedrigen Übertragungsbandbreite und Übertragungsbitrate bearbeitet, wodurch allerdings die Vorteile, die der neue Analog/Digital-Wandler bietet, nicht ausgenutzt werden.

## Patentansprüche

1. Verfahren zur Behandlung von durch ein analoges Fernsprechendgerät gelieferten Fernsprechsignalen und von durch eine Datenendeinrichtung gelieferten Daten in der Teilnehmeranschlußschaltung eines zumindest in Teilbereichen für eine Datenübertragung ausgenutzten digitalen Fernsprechvermittlungssystems, an die das Fernsprechendgerät direkt und die Datenendeinrichtung unter Zwischenschaltung eines Modems über eine gemeinsame analoge Teilnehmerleitung angeschlossen sind, **dadurch gekennzeichnet, daß** zumindest die von der Datenendeinrichtung (PCa, PCb) gelieferten Daten bei der erforderlichen Analog/Digital-Wandlung einer Abtastung mit einer Abtastrate unterworfen werden, die über der für Fernsprechinformationen erforderlichen Abtastrate liegt und/oder die von der Datenendeinrichtung gelieferte Daten repräsentierenden Abtastwerte eine Codierung gemäß einer linearen Kennlinie erfahren, und daß die solcher Art behandelten von der Datenendeinrichtung stammenden Daten direkt einem Datenübertragungsnetz (DN) zugeführt werden.

2. Verfahren nach Anspruch 1, **dadurch gekennzeichnet, daß** die von den Datenendeinrichtungen (PCa, PCb) gelieferten Datensignale für die Übertragung auf der Teilnehmerleitung (TL) einem Trägersignal aufmoduliert sind, dessen Frequenz über dem für die Übertragung der Fernsprechsignale zugelassenen Frequenzband liegt.

3. Teilnehmeranschlußschaltung für die Behandlung von durch ein analoges Fernsprechendgerät gelieferten Fernsprechsignalen und von durch eine Datenendeinrichtung gelieferten Daten in der Teilnehmeranschlußschaltung eines zumindest in Teilbereichen für eine Datenübertragung ausgenutzten digitalen Fernsprechvermittlungssystems, an die das Fernsprechendgerät direkt und die Datenendeinrichtung unter Zwischenschaltung eines Modems über eine gemeinsame analoge Teilnehmerleitung angeschlossen sind, **gekennzeichnet durch** einen Analog/Digital-Wandler mit einer über der für Fernsprechinformationen erforderlichen hohen Abtastrate, dem sowohl die von dem Fernsprechendgerät (Tela, Telb) gelieferten Fernsprechsignale als auch die von der Datenendeinrichtung (PCa, PCb) gelieferten Datensignale zugeführt werden, sowie **durch** einen digitalen Signalprozessor (DSP), der die von dem Analog/Digital-Wandler abgegebenen digitalen Signale zumindest sofern sie Fernsprechsignale repräsentieren auf die für die Übertragung vorgesehene Übertragungsbitrate reduziert und die Fernsprechsignale repräsentierenden Signale dabei einer Codierung gemäß einer nicht linearen Kennlinie unterwirft.

4. Teilnehmeranschlußschaltung nach Anspruch 3, **dadurch gekennzeichnet, daß** sie eine digitale Schnittstelle aufweist, über die die vom digitalen Signalprozessor abgegebenen Digitalsignale, sofern sie Signale der Datenendeinrichtung repräsentieren, einem Datennetz (DN) zugeführt werden bzw. von dort kommende für die Datenendeinrichtung (PCa, PCb) bestimmte Datensignale dem digitalen Signalprozessor (DSP) zugeführt werden.

## Claims

1. Method for treating telephone signals which are supplied by an analogue telephone terminal, and data which is supplied by a data terminal, in the subscriber access circuit of a digital telephone switching system which is used, at least in subareas for data transmission, to which the telephone terminal is connected directly and the data terminal is connected with the interposition of a modem via a common analogue subscriber line, **characterized in that** at least the data which is supplied from the data terminal (PCa, PCb) is subjected, during the necessary analogue/digital conversion, to sampling at a sampling rate which is higher than the sampling rate required for telephone information, and/or the sample values which represent data supplied from the data terminal are coded in accordance with a linear characteristic, and **in that** the data which originates from the data terminal and has been treated in such a way is supplied directly to a data transmission network (DN).

2. Method according to Claim 1, **characterized in that** the data signals which are supplied from the data terminals (PCa, PCb) are modulated for transmission on the subscriber line (TL) onto a carrier signal whose frequency is higher than the frequency band allowed for transmission of the telephone signals.

3. Subscriber access circuit for treating telephone signals which are supplied by an analogue telephone terminal and data which is supplied by a data terminal in the subscriber access circuit on a digital telephone switching system which is used at least in subareas for data transmission, to which the telephone terminal is connected directly and the data terminal is connected with the interposition of a modem via a common analogue subscriber line, **characterized by** an analogue/digital converter having a sampling rate which is higher than that required for telephone information, to which both the telephone signals which are supplied from the telephone terminal (Tela, Telb) and the data signals which are supplied from the data terminal (PCa, PCb) are supplied, and by a digital signal processor (DSP) which, at least to the extent that they represent telephone signals, reduces the digital signals emitted from the analogue/digital converter to the transmission bit rate intended for transmission, and subjects those signals which represent telephone signals to coding in accordance with a non-linear characteristic, in the process.

4. Subscriber access circuit according to Claim 3, **characterized in that** said circuit has a digital interface via which the digital signals which are emitted from the digital signal processor are supplied to a data network (DN), to the extent that they represent signals from the data terminal, and data signals coming from there and intended for the data terminal (PCa, PCb) are supplied to the digital signal processor (DSP).

## Revendications

1. Procédé destiné au traitement de signaux téléphoniques délivrés par un terminal analogique de téléphonie et de données délivrées par un poste terminal de traitement de données, dans le circuit de raccordement d'abonné d'un système numérique de commutation téléphonique utilisé, au moins en partie, pour une transmission de données, sur lequel sont raccordés, via une ligne d'abonné analogique commune, le terminal analogique de téléphonie, directement, et le poste terminal de traitement de données, par l'intermédiaire d'un modem, **caractérisé par le fait que** au moins les données délivrées par le poste terminal de traitement de données (PCa, PCb) sont soumises, lors de la conversion nécessaire analogique/numérique, à un échantillonnage ayant un taux d'échantillonnage supérieur au taux d'échantillonnage nécessaire aux informations de téléphonie et/ou les valeurs d'échantillonnage représentant les données délivrées par le poste terminal de traitement de données subissent un codage selon une caractéristique linéaire et que les données provenant du poste tenninal de traitement de données et traitées de cette façon sont transmises directement à un réseau de transmission de données (DN).

2. Procédé selon la revendication 1 **caractérisé par le fait que** les signaux de données délivrés par les postes terminaux de traitement de données (PCa, PCb) sont modulés, pour la transmission sur la ligne d'abonné (TL), sur un signal porteur, dont la fréquence est au-dessus de la bande de fréquence admissible pour la transmission des signaux téléphoniques.

3. Circuit de raccordement d'abonnés destiné au traitement de signaux téléphoniques délivrés par un terminal analogique de téléphonie et de données délivrées par un poste terminal de traitement de données, dans le circuit de raccordement d'abonné d'un système numérique de commutation téléphonique utilisé, au moins en partie, pour une transmission de données, sur lequel sont raccordés, via une ligne d'abonné analogique commune, le terminal analogique de téléphonie, directement, et le poste terminal de traitement de données, par l'intermédiaire d'un modem, **caractérisé par** un convertisseur analogique/numérique ayant un taux d'échantillonnage élevé supérieur à celui qui est nécessaire pour les informations téléphoniques, sur lequel sont appliqués non seulement les signaux téléphoniques délivrés par le terminal téléphonique (Tela, Telb), mais aussi les signaux de données délivrés par le poste terminal de traitement de données (PCa, PCb), ainsi que par un processeur numérique de signaux (DSP) qui réduit les signaux numériques délivrés par le convertisseur analogique/numérique, au moins dans la mesure où ils représentent des signaux téléphoniques, au débit binaire de transmission prévu pour la transmission et soumet, en même temps, les signaux représentant des signaux téléphoniques à un codage conformément à une caractéristique non linéaire.

4. Circuit de raccordement d'abonnés selon la revendication 3 **caractérisé par le fait qu'**il comporte une interface numérique par l'intermédiaire de laquelle les signaux numériques délivrés par le processeur numérique de signaux, dans la mesure où ils représentent des signaux du poste terminal de traitement de données, sont transmis à un réseau de données (DN) ou, respectivement, des signaux de données provenant de ce réseau de données et destinés au poste terminal de traitement de données (PCa, PCb) sont appliqués au processeur numérique de signaux (DSP).
